# EUROPEAN PATENT APPLICATION

(11) **EP 1 753 198 A1**
(43) Date of publication of application: **14.02.2007**
(21) Application number: 05291699.6
(22) Date of filing: 09.08.2005
(51) Int. Cl.: H04L 29/06, H04M 7/00, H04L 12/56

(54) **Voice over IP Network Architecture**

(71) Applicant: ALCATEL, 75008 Paris (FR)
(72) Inventor: Baeder, Rainer, 70771 Leinfelden-Echterdingen (DE)
(74) Representative: Urlichs, Stefan

(57) **Abstract**

A network architecture for a next generation network which contains at least two domains and a method of transmitting a call using voice over IP technique over at least two network domains are presented, wherein instead of point-to-point connections between the two network domains, an interconnection domain is provided which contains a number of Session Border Controllers and at least one Softswitch for provisioning connections between selected ones of said Session Border Controllers.

## Description

### Field of the Invention

The present invention relates to the field of telecommunications a more particularly to a network architecture for a Next Generation Network comprising at least two network domains and to a method of transmitting a call using voice over IP technique over at least two network domains.

### Background of the Invention

While public telephone networks were for a long time exclusively build on circuit switching technology, with the advent of what is known as the Next Generation Network (NGN), a move will be made towards packetized transport, i.e. Voice over IP (VoIP).

NGNs and VolP networks have been described in several standardization bodies, defining network models and an architecture of the new network. These standardization bodies include 3GPP with IMS (IP Multimedia Subsystem), ETSI with TISPAN (Telecoms & Internet Converged Services & Protocols for Advanced Networks) and MFS who are defining the architectural aspects.

By looking at the architecture and network models it becomes obvious that the standardization activities are focused on a single network while basically neglecting any peering models.

NGN is mainly based on two key aspects, i.e. separation of signaling and media on the one hand and packetized transport (Voice over IP) on the other hand. Session Border Controllers (SBCs) are new elements in NGN networks, which are in general used to interconnect two conversational IP networks. A Session Border Controller is used for example as the demarcation point between the residential IP domain of a subscriber and the domain of the operator to overcome certain limitations which arise due to the use of Network Address and Port Translation (NAPT) in the residential domain. Session Border Controllers are on the other hand used as some sort of packet-to-packet gateways at the interconnect between two operators to avoid the (expensive) need of de-packetization to TDM, use a TDM interconnect and re-packetization, since the latter would result in reduced perceived voice quality and increased delay. In other words, a Session Border Controller may be installed in the Access and is then referred to as an Access Gateway, which will represent the demarcation point between the private IP domain and the operators domain, and another Session Border Controller may be installed in the Core, representing the demarcation point between two independent operators domains.

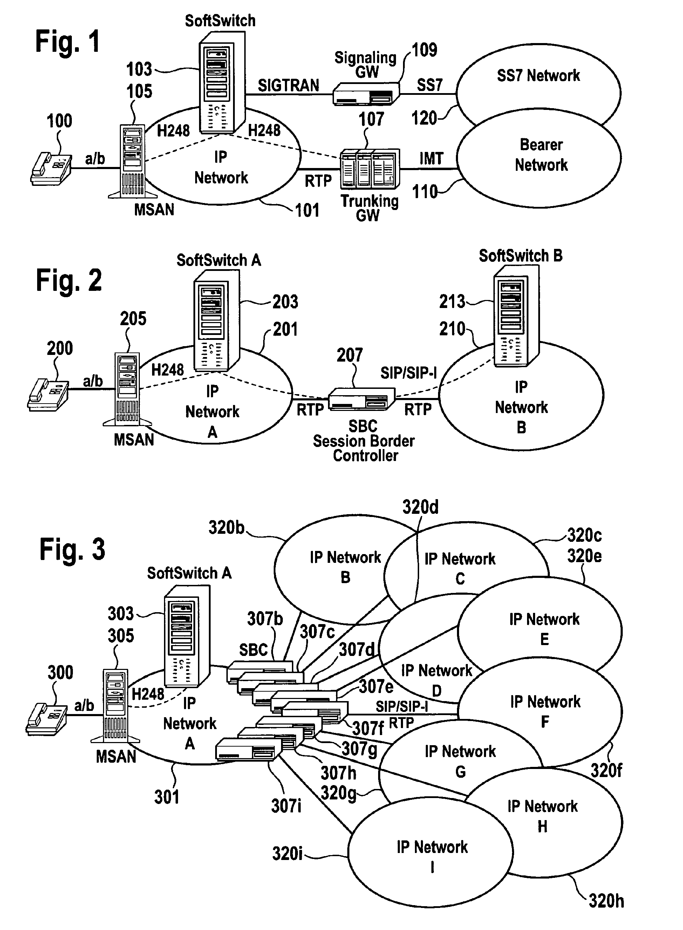

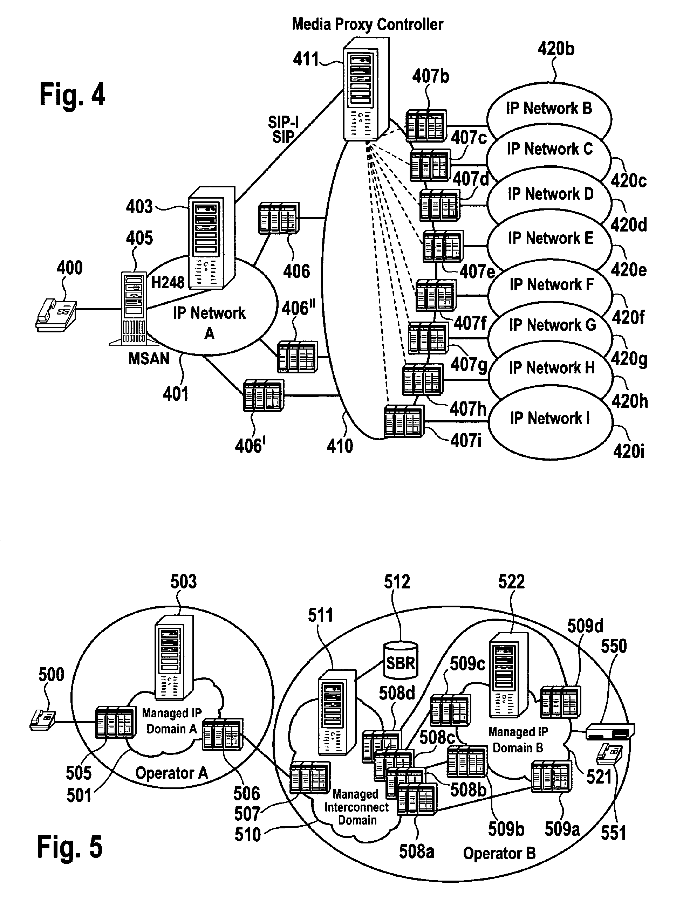

This is shown for example in an MFS Technical report entitled "IMS Reconciliation White Paper" by Chris Daniel, April 2005, which is incorporated by reference herein, and which shows in figure 4 a physical network architecture wherein Session Border Controllers are used at the demarcation point towards the subscriber and at the interconnection point towards a second IP network service provider.

In all known NGN/NoIP architectures, however, Session Border Controllers are only suited and used to provide point-to-point interconnections between networks or network domains. With the growth of NGN networks, the number of point-to-point connections will soon exceed a manageable size. Moreover, the use of dedicated SBCs for individual point-to-point connections is inefficient and not very flexible.

It is therefore an object of the present invention to provide a scalable network architecture comprising at least two network domains and a corresponding method of transmitting a call, which both do not suffer from the limitations of the known solutions.

### Summary of the Invention

These and other objects that appear below are achieved by a network architecture for a next generation network which contains at least two domains and by a method of transmitting a call using voice over IP technique over at least two network domains, wherein instead of point-to-point connections between the two network domains, an interconnection domain is provided which contains a number of Session Border Controllers and at least one Softswitch for provisioning connections between selected ones of said Session Border Controllers.

### Brief Description of the Drawings

Preferred embodiments of the present invention will now be described with reference to the accompanying drawings in which
- figure 1: shows a prior art NGN interfacing with a traditional circuit switched TDM network;
- figure 2: shows a prior art NGN interfacing with a second NGN;
- figure 3: shows a prior art NGN interfacing with multiple other NGNs;
- figure 4: shows an NGN connected to an interconnection network which interfaces according to the invention multiple other NGNs; and
- figure 5: shows a second embodiment of an NGN owned by operator A interfacing via an interconnection network with another NGN of an operator B.

### Detailed Description of the Invention

Next-Generation Network is a generic term used to describe the emerging packet-based networks. Such networks feature mixed traffic types such as voice, video, and data, and each traffic type receives an appropriate class of service.

In the NGN model there exist gateway functions such as Residential Gateways, Access Gateways, Trunking Gateways, or Signaling Gateways. Softswitches, which are also known as Media Gateway Controllers, serve for call control functions. A Signaling Gateway can also be integrated into a Softswitch.

With the advent of IMS (IP Multimedia Subsystem), a dedicated model has been developed, which standardizes the core and access network by defining closed functional blocks. The present invention provides a peering model on which IMS or "legacy" NGN based networks interoperate properly. Legacy NGN networks are usually defined in a closed zone. Access Gateways, Residential Gateways or SIP (Session Initiation Protocol) phones are connected to the NGN "cloud" and exit the network at a Trunking Gateway to the "rest of the world". This is shown schematically in figure 1.

A telephone set 100 is connected via a telephone line (e.g. ISDN) to an Access Gateway 105, which converts the TDM signal from the telephone line to IP packets and sends the signaling information to a Softswitch 103 using the H.248 signaling protocol. H.248, which is also known as Megaco (see RFC 3015), is a standard protocol for handling the signaling and session management needed during a multimedia conference. An alternative would be the Media Gateway Control Protocol (MGCP) defined in RFC 2885.

The Softswitch 103 determines a route through the IP network 101, which, since the call in this example is destined for a subscriber connected to a circuit switched public telephone network 110 outside the IP network 101, leads to Trunking Gateway 107. The Softswitch 103 then provisions an RTP connection (Real-time Transport Protocol) by requesting the Access Gateway 105, the Trunking Gateway 107, and any intermediate IP Router along the chosen route (not shown) to reserve a certain capacity for the packetized voice signal. RTP is the Internet-standard protocol for the transport of real-time data, including audio and video. It is a packet based communication protocol that adds timing and sequence information to each packet to allow the reassembly of packets to reproduce real time audio and video information. Moreover, the Softswitch forwards the signaling information to a Signaling Gateway 109 using a SIGTRAN protocol, i.e., a Protocol stack such as SCTP defined by the SIGTRAN working group of IETF (Internet Engineering Task Force), which is a protocol aiming at providing an ETSI no.7 protocol over IP (see RFC 2960 published Oct. 2000). An alternative would be the M2UA signaling protocol.

The Signaling Gateway 109 converts the signaling information to SS7 (Signaling System No. 7), i.e. the common protocol by which network elements in the public switched telephone network (PSTN) exchange information over a digital signaling network 120 in order to handle call setup, routing, and control. The Trunking Gateway 107 converts the VoIP signals to and from IP network 101 into TDM signals having the common IMT format and sends these to the bearer network 110, where the called subscriber is located. The call is then processed and established in a conventional manner by the PSTN 110 and its SS7 signaling network 120.

In the future, circuit switched PSTN domains will be replaced bit by bit with NGN domains. Figure 2 shows the situation that bearer PSTN 110 and its SS7 network 120 is replaced by an IP network B 210 having its own Softswitch 213. Instead of Signaling and Trunking Gateways 109, 107 of figure 1, a Session Border Controller (SBC) 207 interconnects the IP network A 201 and the IP network B 210. If a user 200 wishes to call another user who is located in IP network B, an RTP connection from his Access Gateway 205 to the SBC 207 is established under control of Softswitch A 203 and another RTP connection is established from SBC 207 via IP network B to the Access Gateway of the called party (not shown) under control of Softswitch B 213. Softswitch A 203 communicates for this purpose the signaling information via SBC 207 to Softswitch B 213 using the SIP/SIP-I protocol (SIP: Session Initiation Protocol), i.e., a signaling protocol for Internet conferencing, telephony, presence, events notification and instant messaging developed by the IETF.

The architecture of a Session Border Controller can either follow the NGN approach of a decomposed model, with a separation of Signaling and Media, or SBCs can be designed as combined boxes. In the access an SBC typically comes along in an integrated model where the signaling and the media part are integrated on the same physical device. While in the network core the SBC is a decomposed SBC with a signaling SBC and a media SBC, which is also referred to as a Media Proxy.

The key features of an SBC will be the following separated into functions of a Media Proxy Controller and functions of a Media Proxy as such. It has to be noted, however, that depending on the actual application not all but only a subset of these features may be implemented in an actual network implementation.

Media Proxy High level functions:
- Bandwidth allocation and CAC functions
- Policing and marking (DSCP)
- Firewall (Media Pin hole Control)
- Network Address and Port Translation (NAPT) and NAT/FW traversal
- DSP services
- Quality and SLA monitoring
- Support lawful Interception
- DOS protection

Media Proxy Controller High Level Functions:
- Signaling protocol translation and interworking
- Message scrubbing for end-user identity and address hiding
- Topology and infrastructure hiding
- Authentication Authorization Accounting (AAA)
- Firewall (Media Pin hole Control)
- Privacy
- Session based routing
- Load related services (sharing and balancing)
- DSP service control
- Call statistics maintenance
- Support for lawful intercept
- DOS protection

However, as soon as a growing number of networks evolve towards NGN, more NGN provider will ask for peering interfaces and the networks will rapidly become unmanageable. Such a situation is shown schematically in figure 3, where eight neighboring networks 320b-320i are connected to IP network A 301 via respective SBCs 307b-307i. Security issues will be a main obstacle to share SBCs among several operators. Issues will arise whether the SBCs have to know the network topology and to which Softswitch the SIP/SIP-I messages have to be forwarded. Same is true for the addressed Media Proxy.

Therefore, a basic idea of the present invention is to provide instead of a plurality of point-to-point connections a new network which serves to interconnect with other operators. This interconnection network can be used as security line between the home network (trusted zone) and the foreign network (un-trusted zone). The new interconnection network will hence acts as a De-Militarized Zone (DMZ).

The invention is on the one hand based on the decomposed model for the SBCs, i.e., splitting the Session Border Controller into the Media Proxy (MP) responsible for RTP relaying and the Media Proxy Controller (controlling the Media Proxy). On the other hand, the invention introduces a new network between the trusted home domain and the un-trusted foreign domain.

In Figure 4, a first IP network A 401 is connected at three points via respective SBCs 406, 406' , and 406" to an interconnection network 410. In the interconnection network 410, there are eight SBCs 407b-407i, each of which interfaces a further IP network C-I 420b-420i, respectively. The SBCs 407b-407i are controlled by a mutual Media Proxy Controller, which acts as the Softswitch of the interconnection network 410.

If a subscriber located in IP network A places a call from his telephone set 400 to another subscriber who is located in another IP network, Softswitch 403 provisions an RTP connection from Access Gateway 405 to one of the SBCs, say to SBC 406 and forwards the signaling information to Softswitch 411 of the interconnection gateway 411. Softswitch 411 in turn provisions a connection to the SBC that connects to the corresponding IP network of the called subscriber and the Softswitch of the addressed network (not shown) provisions an RTP connection to the called subscriber.

Another embodiment of the invention is shown schematically in figure 5. A POTS subscriber (Plain Old Telephone System) 500 is connected via an Access Gateway 505 to an IP network 501 of an operator A. In IP network 501, there are also shown a Softswitch 503 and a SBC 506, which builds the interface to the network of an operator B 520. The network operator B 520 has an IP network domain 521 and an own interconnection network 510. The interconnection network 510 contains five SBCs 507, 508a-508d and a Softswitch 511 for call control. The four SBCs 508a-508d connect to respective four SBCs 509a-509d in the IP network domain B 521, while SBC 507 is connected to SBC 506 in the IP network domain A 501. Softswitch 522 controls call set-up in IP network domain B 521. Subscriber equipment 550, 551 is connected to the network, i.e., a Residential Gateway 550 and a SIP phone 551 of the subscriber.

If subscriber 500 whishes to place a call to subscriber 551 who is located in IP network domain B 521, Softswitch 503 provisions an RTP connection to SBC 506, Softswitch 511 provisions an RTP connection from SBC 507 to let say SBC 508d and Softswitch 522 provisions a connection from SBC 509d to the Residential Gateway 550 at the called subscriber's premises.

As can be seen from figure 5, there are four parallel connections between interconnection network 510 to the managed IP domain B 521. This allows to use the shortest path to a called subscriber. Softswitch 511 is thus equipped with an intelligent database 512.

Enhancing this network with more routing intelligence enables least-cost-routing, congestion control, short-cut finder, paired with constraints of network resource, available bandwidth, costs and other, which provides a new network model for International VoIP provider and opens up new applications in the network, such as bandwidth brokers, selling minutes of usage on IP links, redefined worldwide "least-cost-routing", and sharing of worldwide services.

The intelligent database 512 is a key for optimized routing in an interconnected NGN with several network domains. It can be fed with latest updates by the network itself and is capable of routing in a optimized way.

One application of the interconnection network will be to sell and buy minutes wherever it is needed and hence act as a Bandwidth Broker. Within the NGN/VolP area different subscribers may be handled differently. For example, teens who are paying less for lower service quality will be routed in a different way than other user groups paying for premium service. The intelligent routing capabilities will enable faster provisioning in almost real-time, using not only E164 telephone numbers, but also "sipto:", alias, ENUM and many other types of identifiers to route calls properly.

The Media Proxy itself may implement a Signaling Firewall, checking the signaling messages for corect content, flood DOS attacks, rate control and other security threats. The Media Proxy itself only allows bearer (based on RTP flows) to enter the Media Proxy.

Another important aspect of the invention is that the new interconnection network allows to interface a number of "foreign" networks. Such networks that need to be interfaced are also called OLOs (Other Licensed Operators). The Softswitch of the interconnection network acts now as a default Softswitch for all OLOs, so that the Softswitches of the local domain do not need any knowledge of "foreign" subscribers, anymore. The new interconnect network will perform signaling conversion (SIP to SIP-I, etc) and media conversion (for example conversion of the coding from G.711-20ms to G.729). This architecture is well suited for national as well as international interconnections between independent network domains.

One or more of the following functions may be provided by the interconnection network:
- Firewalling
   o Media (RTP, RTCP, UDP, IP, etc)
   o Signaling (SIP, SIP-I, H248,
   o Rate Control on TCP/UDP
   o Rate Control on Signaling (SIP, SIP-I, etc)
   o Rate Control on Media (RTP, RTCP)
   o Address filtering on source/destination and hop
- Mediation and Interworking
   o Transport Interworking
      ■ IPv4-2-IPv6 adaptation
      ■ NAPT- Network Address and Port Translation
      ■ QoS adaptation
         • ToS, RSVP
      ■ Virtual Network adaptation
         • MPLS, VPN, VLAN
   o Signaling Interworking
      ■ SIP-2-SIP-I and vica versa
      ■ SIP-2-H323
      ■ MGCP and H248
      ■ M3UA-2-M2UA
   o Media Interworking
      ■ Codec conversion and adaptation
         • G711-2-G729, G729-2-AMR, etc
      ■ Codec characteristic adapatation
         • G711;10ms -2- G711;20ms, etc
- Operator Control
   o For business rev. assurance (avoid controller bypass)
   o QoS level assurance (no uncontrolled network traffic)
   o Detection & termination of hanging calls
- Security Proxy & Brokerage
   o Masking of internal (architectural) info to outside networks (privacy & topology hiding)
   o Separation of change impact
   o Simplify subscriber mobility
   o Call Routing (source based)
      ■ Network (type) selection
      ■ New domain (other Softswitch) selection (based on called party ID)
   o Service Resolution
      ■ Softswitch type
   o Location Resolution
   o Identity Resolution
   o Virtual BGW in the concentrated access domain to be controlled by different BGC / SX in the core domains (different OLO's)
- QoS / SLA Manager
   o Initial Granting Check
      ■ What is requested?
      ■ Is this according to SLA?
      ■ Is the network able to provide? (network actual capabilities)
   o SLA Realization
      ■ QoS level marking (ToS, VLAN, MPLS...)
   o SLA Enforcement
      ■ Detect SLA violation
      ■ React (terminate, rate limit,...)
- Monitoring & Supervision
   o Call Statistics
      ■ Number of calls
      ■ Successful / unsuccessful
      ■ Duration of calls
      ■ Number of Packets send during call
      ■ Ratio Silence Suppression - Voiced Time
   o Service Statistics
      ■ Type of services used
      ■ Volumes, ...
   o SLA monitoring
      ■ Access (subscriber)
      ■ Peering (to OLO)
   o QoS monitoring (passive Voice measurement based on statistics)
   o QoV monitoring (active Voice measurement signals)
   o Network (traffic, BW,) monitoring
- Security
   o Encryption
      ■ SIP
      ■ H.248
      ■ SNMP
      ■ RTP
      ■ RTCP
   o Encryption method
      ■ TLS
      ■ SSL
      ■ IPSec
   o Key management
- Lawful Intercept
   o Signaling
   o Y-GW function
- Accounting Support
   o CDR related information generation
   o SLA coupled statistics
- Effectiveness increase
   o RTP multiplexing
   o Header compression

Having described embodiments of the present invention in detail, it should be clear to those skilled in the art that various modification, substitutions, and enhancements would be possible without departing from the concepts of the invention. It should be clear that the invention is not limited to voice communication between end-users but will equally apply to any kind of multimedia sessions between any kind of subscribers.

## Claims

1. A next generation public telephone network comprising at least two network domains, each of said network domains comprising a Softswitch for provisioning connections for packetized transport of user sessions within the corresponding network domain, wherein said at least two network domains are interconnected using at least one Session Border Controller acting as packet-to-packet gateway between said at least two network domains,
**characterized by**
an interconnection network comprising an number of Session Border Controllers, wherein at least a first of said Session Border Controllers is connected to a first of said at least two network domains and at least a second of said Session Border Controllers is connected to a second of said at least two network domains, said interconnection network further comprising a dedicated Softswitch for provisioning connections between selected ones of said Session Border Controllers.

2. A next generation public telephone network according to claim 1, wherein said dedicated Softswitch is configured as default Softswitch for sessions between subscribers, who are located in different network domains.

3. A next generation public telephone network according to claim 1, wherein said dedicated Softswitch of said interconnection network comprises an intelligent database storing routing data taking into account least-cost-routing, congestion control, short-cut finding, constraints of network resources, bandwidth availability and/or bandwidth costs.

4. A next generation public telephone network according to claim 1, wherein said dedicated Softswitch of said interconnection network is adapted to support at least one of the following functions:
- Signaling protocol translation and interworking,
- Message scrubbing for end-user identity and address hiding,
- Topology and infrastructure hiding,
- Authentication Authorization Accounting,
- Firewall function,
- Privacy function,
- Session based routing,
- Load related services including sharing and balancing,
- DSP service control,
- Call statistics maintenance,
- Support for lawful intercept, and
- DOS protection.

5. A next generation public telephone network according to claim 1, wherein said first and second Session Border Controllers of said interconnection network is adapted to support at least one of the following functions:
- Bandwidth allocation and CAC functions,
- Policing and marking,
- Firewall function,
- Network Address and Port Translation and NAT/FW traversal,
- DSP services,
- Quality and SLA monitoring,
- Support lawful interception, and
- DOS protection.

6. A method of establishing a call from a calling subscriber to a called subscriber over at least two network domains of a next generation public telephone network, wherein said calling subscriber is located in a first of said at least two network domains and wherein said called subscriber is located in a second of said at least two network domains, said method comprised the steps of:
- sending signaling information from said calling subscriber to a first Softswitch assigned to said first network domain,
- provisioning a connection from said calling subscriber through said first network domain to a first Session Boarder Controller under control of said first Softswitch,
- transferring signaling information from said first Softswitch to a second Softswitch,
- provisioning a connection from said a first Session Boarder Controller to a second Session Boarder Controller under control of said second Softswitch,
- transferring signaling information from said second Softswitch to a third Softswitch assigned to said second network domain, and
- provisioning a connection though said second network domain from said a second Session Boarder Controller to said called subscriber under control of said third Softswitch.

## Amended claims

### Amended claims in accordance with Rule 86(2) EPC.

**1.** A next generation public telephone network comprising at least two network domains (401, 420b-i; 501, 521), each of said network domains (401, 420b-i; 501, 521) comprising a Softswitch (403; 503, 522) for provisioning connections for packetized transport of user sessions within the corresponding network domain, wherein said at least two network domains (401, 420b-i; 501, 521) are interconnected using at least one Session Border Controller (406, 406', 406"; 506) acting as packet-to-packet gateway between said at least two network domains (401, 420b-i),
**characterized by**
an interconnection network (410; 510) comprising an number of Session Border Controllers (406, 406', 406", 407b-i; 507, 508a-d), wherein at least a first of said Session Border Controllers (406, 406', 406"; 506) is connected to a first of said at least two network domains (401; 501) and at least a second of said Session Border Controllers (407b-i; 508a-d) is connected to a second of said at least two network domains (420b-i; 521), said interconnection network (410; 510) further comprising a dedicated Softswitch (411; 511) for provisioning connections between selected ones of said Session Border Controllers (406, 406', 406", 407b-i; 507, 508a-d).

**2.** A next generation public telephone network according to claim 1, wherein said dedicated Softswitch (411; 511) is configured as default Softswitch for sessions between subscribers (500; 551), who are located in different network domains.

**3.** A next generation public telephone network according to claim 1, wherein said dedicated Softswitch (511) of said interconnection network (510) comprises an intelligent database (512) storing routing data taking into account least-cost-routing, congestion control, short-cut finding, constraints of network resources, bandwidth availability and/or bandwidth costs.

**4.** A next generation public telephone network according to claim 1, wherein said dedicated Softswitch (411; 511) of said interconnection network (410; 510) is adapted to support at least one of the following functions:
- Signaling protocol translation and interworking,
- Message scrubbing for end-user identity and address hiding,
- Topology and infrastructure hiding,
- Authentication Authorization Accounting,
- Firewall function,
- Privacy function,
- Session based routing,
- Load related services including sharing and balancing,
- DSP service control,
- Call statistics maintenance,
- Support for lawful intercept, and
- DOS protection.

**5.** A next generation public telephone network according to claim 1, wherein said first and second Session Border Controllers (406, 406', 406", 407b-i; 507, 508a-d) of said interconnection network (410; 510) is adapted to support at least one of the following functions:
- Bandwidth allocation and CAC functions,
- Policing and marking,
- Firewall function,
- Network Address and Port Translation and NAT/FW traversal,
- DSP services,
- Quality and SLA monitoring,
- Support lawful interception, and
- DOS protection.

**6.** A method of establishing a call from a calling subscriber (500) to a called subscriber (551) over at least two network domains (501; 521) of a next generation public telephone network, wherein said calling subscriber (500) is located in a first of said at least two network domains (501) and wherein said called subscriber (551) is located in a second of said at least two network domains (521), said method comprised the steps of:
- sending signaling information from said calling subscriber to a first Softswitch (503) assigned to said first network domain(501),
- provisioning a connection from said calling subscriber (500) through said first network domain (501) to a first Session Boarder Controller (506) under control of said first Softswitch (503),
- transferring signaling information from said first Softswitch (503) to a second Softswitch (511),
- provisioning a connection from said first Session Boarder Controller (506) to a second Session Boarder Controller (508o-d) under control of said second Softswitch (511),
- transferring signaling information from said second Softswitch (511) to a third Softswitch (522) assigned to said second network domain (521), and
- provisioning a connection though said second network domain (521) from said a second Session Boarder Controller (508a-d) to said called subscriber (551) under control of said third Softswitch (522).
